**Europäisches Patentamt**

**European Patent Office**

**Office européen des brevets**

(19)

(11) Veröffentlichungsnummer: **0 145 807 B1**

(12)
# EUROPÄISCHE PATENTSCHRIFT

(45) Veröffentlichungstag der Patentschrift:
28.10.87

(51) Int. Cl.⁴: **B 60 B 37/10**

(21) Anmeldenummer: **83112769.1**

(22) Anmeldetag: **19.12.83**

---

(54) **Rad für einen Einkaufswagen.**

---

(43) Veröffentlichungstag der Anmeldung:
26.06.85 Patentblatt 85/26

(45) Bekanntmachung des Hinweises auf die Patenterteilung:
28.10.87 Patentblatt 87/44

(84) Benannte Vertragsstaaten:
**DE FR GB IT NL**

(56) Entgegenhaltungen:
EP - A - 0 083 451
DE - A - 2 932 450
DE - A - 3 037 613
FR - A - 1 007 671
FR - A - 2 288 906
GB - A - 1 315 160
US - A - 3 606 475
US - A - 3 870 371

(73) Patentinhaber: **LEIFHEIT Aktiengesellschaft,
Leifheitstrasse, D-5408 Nassau/Lahn (DE)**

(72) Erfinder: **Ohm, Heinz, Grosser Ring 5,
D-6250 Limburg 9 (DE)**
Erfinder: **Pätzold, Dieter, Scheubachweg 7,
D-5408 Nassau/Lahn (DE)**

---

## Beschreibung

Die Erfindung bezieht sich auf ein Rad gemäss dem Oberbegriff des Anspruchs 1.

Durch die DE-A-3200011 wurde ein derartiges Rad bekannt. Dieses Rad ist zweiteilig aufgebaut und besteht aus einer Achskappe, auf die eine Felge mit Reifen aufgeklipst ist. Nachteilig an dieser Radausführung ist, dass einmal für die Achskappe ein aufwendiges Schiebewerkzeug und für die Felge ein Backenwerkzeug erforderlich sind. Zudem ist Montagezeit für die Zusammenfügung der beiden Bauteile erforderlich.

Aufgabe der Erfindung ist es, ein Rad gleicher technischer Güte zu schaffen, das einstückig ausgeführt ist, also zu dessen Produktion nur ein Werkzeug benötigt wird.

Diese Aufgabe wird erfindungsgemäss durch die Merkmale des Anspruchs 1 gelöst.

Weitere Ausgestaltungen der Erfindung sind den Unteransprüchen zu entnehmen.

Durch die brückenartigen Stege und die Durchbrüche in der Achskappe ist es möglich, ohne Schieberwerkzeug auszukommen. Die Werkzeugkosten werden dadurch besonders niedrig gehalten. Dennoch erfüllt das Rad, insbesondere bezüglich der Festigkeit, alle technischen Anforderungen. Die Radspange kann vormontiert werden, weitere Montageschritte sind nicht erforderlich. Durch den Einschnitt in der Felge auf das Niveau der Achskappenaussenwand wird zudem die Montage der Radspange weiter vereinfacht.

Aus ästhetischen Gründen ist am Aussenumfang der Felge ein Rastwulst zur Halterung einer Kappe vorgesehen. Dies hat zudem den Vorteil, dass der Bereich der Radspange vor Verschmutzung geschützt ist. Das Rad hinterlässt insgesamt einen sehr geschlossenen Eindruck; die Federungseigenschaften sind durch den überstehenden Reifen verbessert.

Ein Ausführungsbeispiel der Erfindung wird im folgenden an Hand der Zeichnungen näher erläutert.

Es zeigen:

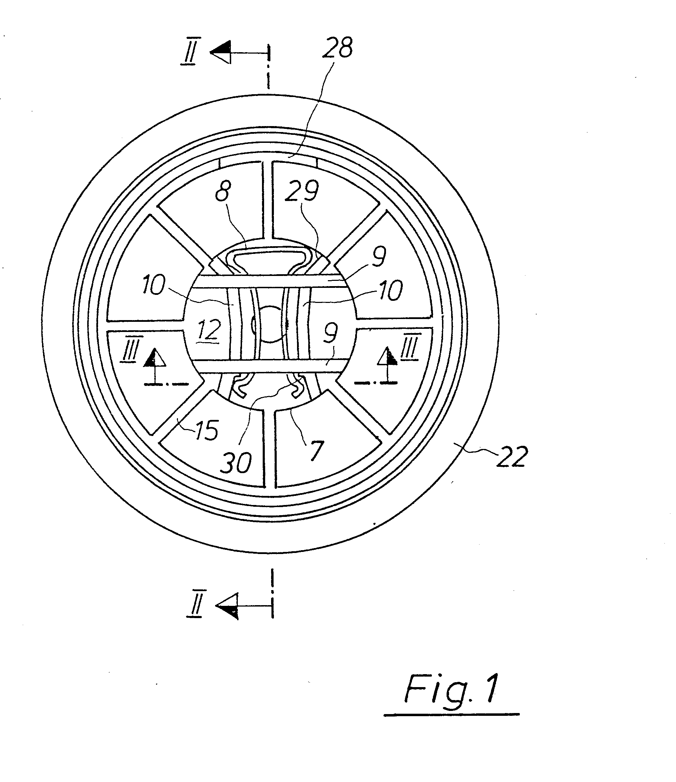

Figur 1 eine Ansicht auf ein Rad mit abgenommener Kappe,

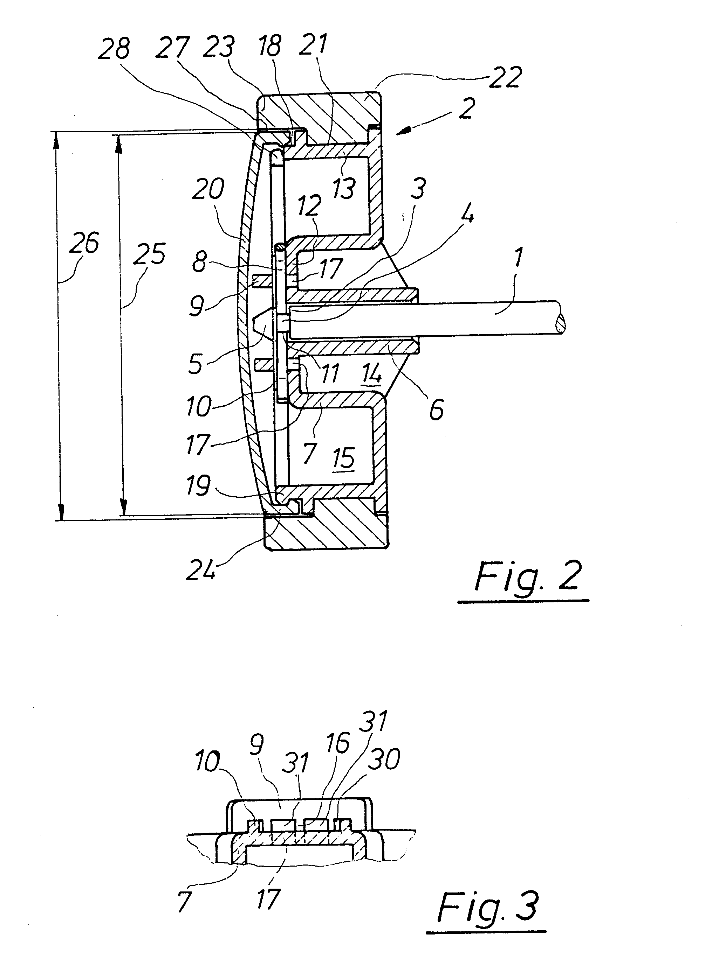

Figur 2 einen Schnitt gemäss der Linie II–II in Figur 1 aber mit aufgesetzter Kappe und

Figur 3 einen Schnitt gemäss der Linie III–III in Figur 1 aber ohne Radspange gezeichnet.

Auf einer Achse 1 ist ein Rad 2 angeordnet. Die Achse 1 ist im Endbereich 3 mit einer Eindrehung 4 versehen; das Achsende 5 endet kegelstumpfartig.

Die Achse 1 ist drehbar in einem hülsenförmigen Ansatz 6, der an eine Achskappe 7 angeformt ist, gelagert und über eine Radspange 8 gesichert. Die Radspange 8, die als zweischenklige, U-förmige Feder ausgebildet ist, wird mittels zweier brückenartiger Stege 9 geführt; sie stützt sich dabei unter Spannung an zwei Seitenwänden 10 und auf dem Nutgrund 11 der Eindrehung 4 ab. Die Stege 9 und die Seitenwände 10 sind auf der Aussenwand 12 der Achskappe 7 angeformt. Die Achskappe 7 ist topfförmig ausgebildet, wobei die Aussenwand 12 den Topfboden bildet. An die Achskappe schliesst sich im Querschnitt mäanderförmig die Felge 13 an.

Die freien Mäanderfelder sind durch Innenrippen 14 und Aussenrippen 15 versteift.

Die brückenförmigen Stege 9 sind mittig durch eine Stegstütze 16 auf der Aussenwand 12 abgestützt. Die Achskappe 7 ist im Projektionsbereich der Stege 9 zwischen den Seitenwänden 10 mit Ausformungsdurchbrüchen 17 versehen.

Die Felge 13 ist am Aussenumfang 18 mit einem Rastwulst 19 zur Halterung einer Kappe 20 versehen. Weiter nimmt die Felge 13 in einem Felgenbett 21 einen Reifen 22 auf. Der Reifen 22 überdeckt mit einem Randbereich 23 die Seitenwand 24 der Kappe 20. Dabei ist der Aussendurchmesser 25 der Kappe 20 kleiner als der Innendurchmesser 26 des Randbereichs 23 vom Reifen 22. Der verbleibende Abstand 27 ermöglicht ein zusätzliches Einfedern des Reifens.

Die Felge 13 ist mit einer Vertiefung 28, die auf dem Niveau der Aussenwand 12 liegt, zum leichteren Einführen der Radspange 8 versehen.

Die beiden Seitenwände 10 bilden zur Vertiefung 23 hin einen Einschubanschlag 29 und enden auf der anderen Seite mit einem Rastabsatz 30. Die Radspange 8 ist entsprechend dem Einschubanschlag 29, dem Rastabsatz 30 und der Tiefe des Nutgrundes 11 profiliert.

Mit 31 ist der Einschnitt für die Radspange 8 bezeichnet. Der Einschnitt 31 ist durch die Stegstütze 16 in zwei Kanäle für die beiden Schenkel der Radspange 8 geteilt.

## Patentansprüche

1. Rad, im wesentlichen bestehend aus einer Achskappe (7) und einer Felge (13) mit Reifen (22) für einen Einkaufswagen, Transportkarren, Kinderwagen oder ähnliches, zur Befestigung an einer Achse (1), die im Endbereich (3) mit einer Eindrehung (4) zur kraft- und formschlüssigen Aufnahme einer in einem seitlich offenen Einschnitt mit einem Rastabsatz (30) eingeschobenen Radspange (8) versehen ist, wobei die Radspange (8) sich unter Spannung zwischen der Seitenwand (10) des Einschnittes und dem Nutgrund (11) der Eindrehung (4) abstützt, dadurch gekennzeichnet, dass die Achskappe (7) und die Felge (13) einstückig, im Querschnitt mäanderförmig ausgeführt sind, und dass der Einschnitt durch zwei brückenartige Stege (9) gebildet ist, die mit der Achskappe (7) einstückig ausgeführt sind.

2. Rad nach Anspruch 1, dadurch gekennzeichnet, dass die Stege (9) etwa mittig auf der Aussenwand (12) der Achskappe (7) abgestützt (16) sind.

3. Rad nach Anspruch 1 oder 2, dadurch gekennzeichnet, dass die Achskappe (7) im Projektionsbereich der Stege (9) zwischen den Seitenwänden (19) mit Ausformungsdurchbrüchen (17) versehen ist.

4. Rad nach einem der Ansprüche 1 bis 3, dadurch gekennzeichnet, dass die Felge (13) in Fortsetzung zum Einschnitt mit einer auf dem Niveau der Achskappenaussenwand (12) liegenden Vertiefung (28) zur leichteren Montage der Radspange (8) versehen ist.

5. Rad nach einem der Ansprüche 1 bis 4, dadurch gekennzeichnet, dass die Felge (13) am Aussenumfang (18) mit einem Rastwulst (19) zur Halterung einer Kappe (20) versehen ist.

6. Rad nach Anspruch 5, dadurch gekennzeichnet, dass der Reifen (22) den Rastwulst (19) überdeckend ausgebildet ist.

**Claims**

1. Wheel, consisting essentially of a hub cap (7) and of a rim (13) with a tyre (22), for a shopping trolley, wheelbarrow, push-chair or the like, intended to be fastened to an axle (1) which, in the end region (3), is equipped with a recessed portion (4) for the non-positive and positive reception of a wheel clip (8) pushed in a laterally open indentation with an engaging shoulder (30), the wheel clip (8) being supported under tension between the side wall (10) of the indentation and the groove bottom (11) of the recessed portion (4), characterized in that the hub cap (7) and the rim (13) are made in one piece and of meander-shaped cross-section, and in that the indentation is formed by two bridge-like webs (9) which are made in one piece with the hub cap (7).

2. Wheel according to Claim 1, characterized in that the webs (9) are supported (16) approximately centrally on the outer wall (12) of the hub cap (7).

3. Wheel according to Claim 1 or 2, characterized in that, in the region of projection of the webs (9), the hub cap (7) is provided with shaping-out perforations (17) between the side walls (19).

4. Wheel according to one of Claims 1 to 3, characterized in that the rim (13) is provided, in a continuation of the indentation, with a depression (28) arranged level with the hub-cap outer wall (12), to make it easier to fit the wheel clip (8).

5. Wheel according to one of Claims 1 to 4, characterized in that the rim (13) is equipped, on the outer periphery (18), with an engaging bead (19) for retaining a cover (20).

6. Wheel according to Claim 5, characterized in that the tyre (22) is designed to overlap the engaging bead (19).

**Revendications**

1. Roue équipant un caddie, un chariot de transport, une voiture d'enfant ou un véhicule analogue, comprenant pour l'essentiel un chapeau d'essieu (7) et une jante (13) munie d'un bandage (22), et destinée à être fixée à un essieu (1) qui est muni, dans sa région extrême (3), d'une dépouille (4) façonnée au tour afin de recevoir, mécaniquement et par concordance de formes, un clips de roue (8) introduit par un décrochement d'emboîtement (30) dans une encoche ouverte latéralement, le clips de roue (8) prenant appui, avec tension, entre la paroi latérale (10) de l'encoche et le fond (11) de la gorge de la dépouille (4) façonnée au tour, caractérisée par le fait que le chapeau d'essieu (7) et la jante (13) sont réalisés d'une seule pièce de section conformée en méandres; et par le fait que l'encoche est formée par deux membrures (9) en forme de ponts, réalisées d'un seul tenant avec le chapeau d'essieu (7).

2. Roue selon la revendication 1, caractérisée par le fait que les membrures (9) prennent appui (16) sensiblement centralement sur la paroi externe (12) du chapeau d'essieu (7).

3. Roue selon la revendication 1 ou 2, caractérisée par le fait que le chapeau d'essieu (7) est pourvu de perforations (17) d'une déformation vers l'extérieur dans la zone de projection des membrures (9), entre les parois latérales (10).

4. Roue selon l'une des revendications 1 à 3, caractérisée par le fait que la jante (13) est munie, dans le prolongement vers l'encoche, d'un renforcement (28) situé au niveau de la paroi externe (12) du chapeau d'essieu, de manière à faciliter le montage du clips de roue (8).

5. Roue selon l'une des revendications 1 à 4, caractérisée par le fait que la jante (13) est dotée, sur son pourtour externe (18), d'un bourrelet d'encliquetage (19) destiné à retenir un couvercle (20).

6. Roue selon la revendication 5, caractérisée par le fait que le bandage (22) est réalisé de manière à coiffer le bourrelet d'encliquetage (19).

_Fig.1_

_Fig. 2_

_Fig. 3_